# EUROPÄISCHE PATENTSCHRIFT

(11) **EP 2 113 543 B1**
(45) Veröffentlichungstag und Bekanntmachung des Hinweises auf die Patenterteilung: **12.07.2017**
(21) Anmeldenummer: 09157832.8
(22) Anmeldetag: 14.04.2009
(51) Int. Cl.: C09J 7/02, C09J 7/04, B65H 19/10

(54) **Klebeband für den Rollenwechsel**
Flying splice adhesive tape
Ruban adhésif de raccordement volant

(30) Priorität: 28.04.2008 DE 102008021247
(43) Veröffentlichungstag der Anmeldung: 04.11.2009
(73) Patentinhaber: tesa SE, 22848 Norderstedt (DE)
(72) Erfinder: Wulf, Stefan Dr., 22869 Schenefeld (DE); Bir, Gerhard Dr., 22117, Hamburg (DE); Nagel, Christoph, 22417, Hamburg (DE); Schwarz, Imke, 20259, Hamburg (DE)

(56) Entgegenhaltungen:
- EP-A1- 0 941 954
- WO-A-02/24562
- WO-A-99/46196
- US-A1- 2008 087 370

## Beschreibung

Die Erfindung betrifft ein Klebeband für den Rollenwechsel von auf Rollen aufgewickeltem Flachbahnmaterial, insbesondere von Papier, sowie ein Verfahren für einen derartigen Rollenwechsel.
Der Rollenwechsel von Flachbahnmaterialien, beispielsweise von Papierbahnen in der Zeitungsindustrie, läuft heutzutage weitgehend automatisiert ab. Zunächst wird das Ende der obersten Bahn (das Ende der obersten Flachbahn "aus Sicht" der Rollenwicklung entspricht dem Anfang der neuen Flachbahn "aus Sicht" des Prozesses) einer neuen Flachbahnmaterialrolle verklebt, damit dieses Ende sich nicht von der Rolle lösen kann. Hierfür werden häufig Klebebänder eingesetzt, die zwei Funktionen aufweisen: Zum einen dienen sie der vorstehend geschilderten Endverklebung der Rolle. Zum anderen sind sie derart gestaltet, dass eine Klebefläche freigelegt werden kann, die das Anbinden der obersten Flachbahnlage der neuen Rolle an eine alte, zur Neige gehenden Flachbahn bewirken kann. Dieses Anbinden (Ankleben) erfolgt, indem die neue Rolle auf im Wesentlichen die gleiche Geschwindigkeit beschleunigt wird, mit der die alte Flachbahn den Prozess durchläuft und dann bei dieser Geschwindigkeit mit der freien Klebefläche an die alte Flachbahn geführt wird. Gleichzeitig mit diesem Anbinden muss ein Lösen der Endverklebung der neuen Flachbahn geschehen, so dass die alte Flachbahn den mit ihr verklebten Anfang der neuen Papierbahn quasi mit in den Prozess zieht und so eine quasi kontinuierlichere ("unendliche") Flachbahn den Prozess, beispielsweise die Druckmaschinen der Zeitungsindustrie, durchläuft. Die Nahtstelle wird in einem späteren Prozessschritt, beispielsweise nach dem Zuschnitt der fertigen Zeitungen, entfernt, so dass diese Nahtstellen den Kunden nicht erreichen.
Klebebänder, die für eine wie vorstehend beschriebene Verklebung geeignet sind, sind im Stand der Technik bekannt. So werden Klebebänder beschrieben, die einen flächig spaltbaren Träger aufweisen, den sowohl auf seiner ober- als auch auf seiner Unterseite mit einer Klebemasse versehen ist. Die genannten Klebebänder sind üblicherweise Bestandteil von Klebebändern, die einen etwas umfassenderen Produktaufbau als ein Dreischichtsystem aufweisen. Derartige Spliceklebebänder sind beispielsweise in den Schriften DE 196 28 317 A, DE 198 30 674 A, DE 199 02 179 A, DE 199 58 223 A, DE 100 58 956, DE 101 23 981, WO 03/20623 A, WO 03/24850 A, DE 102 10 192 A, DE 102 58 667, DE 10 2004 028 312 A, DE 10 2005 051 181 A beschrieben.
Der flächig spaltbare Träger ist derart ausgewählt, dass er zwar bei der Beschleunigung der neuen Rolle das Ende der obersten Flachbahn sicher auf der Rolle hält, aber bei einer Verklebung mit der alten, zur Neige gehenden Flachbahn und dem dabei entstehenden Kraftpeak diese Endverklebung sicher und zuverlässig öffnet. Hierfür haben sich flächig spaltbare Papiere als geeignet herausgestellt. Solche Papiere weisen herstellungsbedingt aber eine Reihe von - insbesondere anorganischen - Füllstoffen, besonders Metallionen, auf, die sich im Herstellprozess kaum vermeiden lassen.

Die für die Spliceklebebänder, die ihre Hauptanwendung in Produkten für die papiererzeugende und -weiterverarbeitende Industrie haben, eingesetzten (Haft-)Klebmassen zeigen in Kontakt mit füllstoffhaltigen Papieren jedoch häufig einen deutlichen Einbruch ihrer klebtechnischen Eigenschaften, der bis hin zum vollständigen Verlust von Klebkraft und Anfassklebrigkeit (Tack) gehen kann. Dieses Problem tritt insbesondere auf, wenn die Klebebänder über einen bestimmten Zeitraum gelagert werden.
Füllstoffhaltige Substrate, insbesondere Papiere können durch Alterungsprozesse oder äußere Einflüsse mehrwertige Metallionen abgeben. Insbesondere ergibt sich durch die häufig im Papier oder in Substanzen, mit denen das Papier behandelt wurde, vorhandenen Calciumionen ein Problem, da Calcium ein in der Papierindustrie üblicher und zunehmend eingesetzter Füllstoff und Beistoff in Strichmitteln ist.
Der Eigenschaftsverlust der (Haft-)Klebmasse lässt sich insbesondere auf eine Migration der Metallionen in die Klebmasse zurückführen. Die gezielt vernetzten carboxylhaltigen und/oder säurehaltigen Copolymere können auf diesem Weg über das gewünschte Maß hinaus unkontrolliert nachvernetzen. Diese Nachvernetzung führt zu einer nachteiligen Beeinflussung des rheologischen Profils derart, dass eine massive Erhöhung der Kohäsion und damit einhergehend eine Reduktion der Anfassklebrigkeit verursacht wird, ungünstigstenfalls bis hin zum vollständigen Verlust von Klebkraft und Tack.

Eine besondere Gefahr besteht dann darin, dass die Klebkräfte nicht mehr ausreichend sind, um die Endverklebung beim Beschleunigen der neuen Rolle sicher zu halten. Reißt diese Verklebung jedoch auf, so löst sich die oberste Flachbahn, und ein Zusammenbruch des kontinuierlichen Verfahrensablaufs ist die Folge. Solche Unterbrechungen sind mit erheblichen Kosten verbunden.

Insbesondere für die Anwendung in der papierverarbeitenden Industrie, beispielsweise im Zusammenhang mit dem fliegenden Rollenwechsel, stellt sich an die einzusetzenden Klebebänder daher ein strenges Anforderungsprofil. So müssen diese Klebebänder - über die gesamte Anwendungsdauer hinweg - einen hohen Tack, eine gute Kohäsion sowie gute Repulpierbarkeit [Einbringbarkeit in die Pulpe, also den in Wasser gelösten beziehungsweise aufgeschwemmten Papier- oder Faserbrei, bei der Wiederaufbereitung von (Alt-)Papier; nicht zwingend gleichbedeutend mit "Wasserlöslichkeit"] aufweisen.

Die US 2008/087370 A beschreibt ein Klebeband für einen Rollenwechsel mit einem Papierträger und angrenzenden (teilflächig aufgebrachter) Polymerschichten. Das Problem von Calciumionen in dem Papier wird nicht diskutiert, und die hierfür sperrende Wirkung einzelner Schichten des Klebebandes zum Schutze der Klebemassen wird nicht umgesetzt.
Ähnlich stellt es sich in den aus der gemeinsamen Patentfamilie stammenden Schriften WO99/46196 sowie EP 941 954 A dar, die ebenfalls Klebebänder für den Rollenwechsel mit Papierträgern offenbart. Diese Klebebänder können weitere Schichten, wie auch Polymerschichten, umfassen. Aber auch in dieser Schrift wird auf Probleme mit Calciumionen oder eine Lösung zu deren Vermeidung nicht hingewiesen. Schichten auf Basis von Latices sind in den vorgenannten Schriften nur in Form von Polyvinyllatices in der EP 941 954 A erwähnt, die für die vorliegend vorgeschlagene technische Lehre jedoch keine Relevanz besitzen.

Aufgabe der Erfindung war es daher, verbesserte Klebebänder für den fliegenden Rollenwechsel anzubieten, die die Nachteile des Standes der Technik nicht aufweisen und die insbesondere eine hohe Lagerbeständigkeit ohne Verlust oder Verringerung der Klebkraft der Haftklebemassen aufweisen.

Gelöst wird die Aufgabe durch ein Klebeband, wie es im Hauptanspruch dargestellt ist. Die abhängigen Ansprüche beschreiben vorteilhafte Weiterentwicklungen des erfindungsgemäßen Klebebandes.

Dementsprechend beschreibt der Hauptanspruch ein Klebeband für den Rollenwechsel von Flachbahnmaterialien, umfassend einen flächig spaltbaren Träger aus Papier oder einem Papierverbundsystem, zumindest einer Klebemassenschicht, die oberhalb des spaltbaren Trägers angeordnet ist, und einer Klebemassenschicht, die unterhalb des spaltbaren Trägers angeordnet ist, wobei zumindest zwischen dem spaltbaren Träger und der Klebemassenschicht unterhalb des spaltbaren Trägers eine erste Sperrschicht vorgesehen ist, die für Calciumionen (Ca²⁺) undurchlässig ist. Erfindungsgemäß wird eine Sperrschicht gewählt, die durch Auftragen einer wässrigen Latexdispersion erhalten werden kann und die nicht in das Trägermaterial des spaltfähigen Trägers eindringt, wobei die Latices solche auf Acrylatbasis, auf Basis carboxylierter Acrylate, auf Basis carboxylierter Styrol-Butadien-Kautschuke, auf Basis modifizierter Styrol-Butadien-Kautschuke, auf Acrylat-Styrol-Basis, auf Acrylat-Acrylnitrilbasis, auf Butylacrylat-Styrolbasis und/oder auf Butylacrylat-Styrol-Acrylnitrilbasis sind.

Die Sperrschicht ist insbesondere geeignet, den direkten Kontakt zwischen der Papierschicht, in der sich die anorganischen Bestandteile - insbesondere die Calciumionen - befinden, und der Klebemasse zu vermeiden. Eine Migration der entsprechenden Ionen bzw. anderen störenden Bestandteile des Papiers in die Klebemasse wird somit verhindert.

Die Sperrschicht sollte insbesondere flächig dicht sein, also keine Durchlässigkeiten aufweisen. Insbesondere bevorzugt geht man vor, indem die Schicht auf den Träger aufträgt. Vorteilhaft wird die Dispersionsschicht hiernach getrocknet, so dass man eine trockene oder weitgehend trockene Sperrschicht erhält. Nach der Auftragung der Dispersion bzw. insbesondere nach deren Trocknung kann dann die Klebemassenschicht aufgebracht werden, so dass zu keiner Zeit ein direkter Kontakt des Trägers mit der Klebemasse entsteht.
Die Sperrschicht muss einen guten Kontakt sowohl zur Trägerschicht als auch zur Klebemassenschicht aufweisen, um ein Auseinanderfallen des Verbundes während des Spliceprozesses zu vermeiden (dies könnte insbesondere bei nicht hinreichender Festigkeit während der auftretenden Scherbeanspruchungen erfolgen). Es ist daher nützlich, wenn die Sperrschicht vor dem Auftragen der Klebemasse coronabehandelt wird, also einer elektrischen Hochspannungs-Entladung ausgesetzt wird. Eine Coronabehandlung verbessert die Verankerung der Klebemasse auf der Sperrschicht.

Besonders bevorzugt ist zwischen dem spaltbaren Träger und der Klebemassenschicht oberhalb des spaltbaren Trägers eine zweite Sperrschicht vorgesehen, die für Calciumionen undurchlässig ist. Auch diese Schicht wird vorteilhaft zunächst auf den Träger aufgebracht und bevorzugt getrocknet. Dann kann die entsprechende Klebemassenschicht aufgetragen werden. Auch hier ist eine Coronavorbehandlung vorteilhaft. In vorteilhafter Weise hat die zweite Sperrschicht auf dieselbe Zusammensetzung wie die erste Sperrschicht.

In einer besonders bevorzugten Weiterentwicklung des erfindungsgemäßen Klebebandes ist oberhalb der Klebemassenschicht, die oberhalb des spaltfähigen Trägers vorgesehen ist, ein weiterer Träger - im Folgenden "zweiter Träger" genannt - vorgesehen, auf dem sich wiederum eine Klebemassenschicht - im Folgenden dritte Klebemassenschicht genannt - befindet. Durch diesen (zusätzlichen) Teil des Klebebandes wird dann die eigentliche Verbindung zur ablaufenden, zur Neige gehenden Flachbahn hergestellt. Ein solcher zweiter Träger nimmt insbesondere die Zugkräfte auf, die während des Spliceprozesses auftreten. Somit wird der spaltfähige Träger quasi von dieser Aufgabe entlastet, so dass er besser für den Spaltprozess optimiert werden kann.

Die Befestigung zwischen dem spaltfähigen Träger und dem zweiten Träger kann insbesondere durch eine beliebige (oberhalb des spaltfähigen Trägers vorgesehene) Klebemasse geschehen, die nur hinreichend klebkräftig sein muss, um jederzeit - also auch im Splice-Prozess - eine hinreichende Festigkeit der Klebeverbindung zu garantieren. Insbesondere vorteilhaft wird hier eine Selbstklebemasse eingesetzt; sie kann aber beispielsweise auch aushärtend ausgebildet sein.
Wichtig an dem zweiten Träger sind die physikalischen Eigenschaften, vornehmlich die Reißkraft. Diese soll höher als die Bahnspannungen in der Druckmaschine oder anderen Bearbeitungsmaschinen liegen. Insbesondere bei Maschinen mit geringeren Bahnspannungen kann der zweite Träger auch dünner gewählt werden. Dieses hat Vorteile für den Verarbeitungsprozess, da dünnere Materialien den Maschinendurchlauf weniger stören.
Der zweite Träger kann auch aus Papier bestehen, was insbesondere für repulpierbare Klebebänder von Vorteil ist. Zur Erzielung hoher Reißfestigkeiten können aber vorteilhaft auch Folien (beispielsweise Polymerfolien, Metallfolien) eingesetzt werden.

Besonders vorteilhaft ist es, wenn der zweite Träger breiter ist als der spaltfähige Träger. Dabei ist das System aus spaltfähigem Träger und zwei Klebemassenschichten (entsprechend dem Gegenstand des Hauptanspruchs, für diese Ausführung der Erfindung auch als "unterklebtes Klebeband" bezeichnet) bevorzugt nicht mittig, sondern zu einer Kante des zweiten Trägers hin angeordnet. In einer ersten Ausgestaltung können eine der Längsanten des unterklebten Klebebandes und eine der Längskanten des zweiten Trägers bündig angeordnet sein. Bevorzugt ist das unterklebte Klebeband von einer der Längskanten des zweiten Trägers aber in einem Abstand (V) eingerückt angeordnet sein. Für den Einsatz der Erfindung im fliegenden Rollenwechsel hat es sich als sehr vorteilhaft herausgestellt, wenn das unterklebte Klebeband in einem Abstand (V) von bis zu 15 mm, besonders 0,5 bis 7 mm, besser in einem Abstand von 1,5 bis 4 mm, ganz besonders bevorzugt von 2 bis 3,5 mm eingerückt ist.
Wie Versuche ergeben haben, ist es für eine erfolgreiche Prozessführung bei hohen Geschwindigkeiten vorteilhaft, die Kraft für den Spaltvorgang in den spaltfähigen Träger des Spaltstreifens einzuleiten, da es sonst zu lokal unkontrollierten Reißprozessen (oben als "Reißer" bezeichnet) kommt. Hierzu dient der überstehende, durch den Abstand des Spaltstreifens von der Längskante definierte Abschnitt des Klebebandes als Krafteinleithilfe. Reißer konnten dann besonders erfolgreich vermieden werden, wenn dieser Abstand eine gewisse Größe erreicht.

Ist die Einrückung allerdings groß (insbesondere größer 3,5 mm), so kommt es vermehrt zu einem Umschlagen des überstehenden, vorderen Abschnitts des Spleißklebebandes und ebenfalls zu unkontrolliertem Verhalten während des Spleißprozesses, wie man auch in Versuchen feststellt.

Die Breite des Klebebandes (insbesondere gegeben durch die Breite des spaltfähigen Trägers bzw. die Breite des zweiten Trägers, sofern dieser vorhanden ist) beträgt vorteilhaft zwischen 30 und 120 mm, mehr bevorzugt zwischen 40 und 80 mm, ganz besonders bevorzugt 50 mm.

Auf der Oberseite des Klebebandes kann eine Abdeckung, insbesondere aus einem Trennmaterial, vorgesehen sein kann; die insbesondere dazu geeignet ist, das Klebeband handhaben zu können, insbesondere bei der Aufwicklung des Klebebandes eine Trennwirkung zwischen den einzelnen Klebebandlagen zu bewirken. Die Abdeckung besteht insbesondere aus einem silikonisierten Material, vorzugsweise aus silikonisiertem Papier.
Die Abdeckung kann mit einem Schnitt oder einer Sollbruchstelle, insbesondere in Form einer Perforation, eines Anschnitts, einer Schlitzung oder ähnlichem, der bzw. die in Längsrichtung des Klebebandes verläuft, in zwei Abschnitte und geteilt sein oder für eine mögliche Teilung vorbereitet sein.
Der Schnitt bzw. die Sollbruchstelle im gegebenenfalls vorhandenen Abdeckmaterial kann bevorzugt in einem Abstand von 20 bis 40 mm von der linken Begrenzungskante des Klebebands vorgesehen sein.

Vorteilhaft werden zur Herstellung der Sperrschicht Dispersionen verwendet, die filmbildende Komponenten umfassen. Die filmbildenden Komponenten sollten derart gewählt werden, dass sie nicht in die offene (porige) Oberflächenstruktur des zu beschichtenden Trägers, insbesondere des Papiers, eindringen und somit die mechanischen Eigenschaften des Trägermaterials (insbesondere des Papiers) nicht wesentlich verändern. Eine wesentliche Veränderung der Papiereigenschaften würde es insbesondere bedeuten, wenn dieses seine für die Trägerfunktion notwendige Festigkeit verlieren würde oder seine Spaltfähigkeitseigenschaften, wie sie für die Funktion während des Rollenwechsels notwendig sind, einbüßen wurde.

Als besonders geeignet zur Ausbildung der Sperrschicht haben sich wässrige Latexdispersionen herausgestellt. Hierbei ist aber zu beachten, dass Latexdispersionen eingesetzt werden, deren Latex-Tröpfchen nicht in das Trägermaterial (insbesondere Papier) des spaltfähigen Trägers eindringen, da es sonst zur Materialverfestigung kommen könnte und die Sicherheit des Spaltvorganges nicht mehr gewährleistet sein könnte. Daher werden insbesondere vorteilhaft unpolare Latices eingesetzt.

Insbesondere für den Einsatz in der papierverarbeitenden Industrie ist es von Vorteil, wenn einige, besser die meisten, noch besser alle im Prozess zum Einsatz kommenden Bestandteile des erfindungsgemäßen Klebebandes repulpierbar, also insbesondere wasserlöslich oder dispergierbar sind. Dies sollte in bevorzugter Weise auch für die filmbildenden Komponenten gelten, die zur Erzeugung der Sperrschicht dienen.

Die Latices sind erfindungsgemäß solche auf Acrylatbasis (AC), auf Basis carboxilierter Acrylate (carbox. AC), auf Basis carboxilierter Styrol-Butadien-Kautschuke (carbox. SBR), auf basis modifizierter Styrol-Butadien-Kautschuke (mod. SBR), auf Acrylat-Styrol-Basis (AC-S), auf Acrylat-Acrylnitrilbasis, auf Butylacrylat-Styrolbasis (BA-Styrol) und/oder auf Butylacrylat-Styrol-Acrylnitrilbasis (BA-Styrol-AN). Eine Reihe kommerziell erhältlicher Produkte hat sich als erfindungsgemäß sehr geeignet herausgestellt und wird in der folgenden Tabelle wiedergegeben, ohne sich durch diese Angabe unnötig beschränken zu wollen.

| **Hersteller** | **Bezeichnung** | **Stoffklasse** |
|---|---|---|
| PolymerLatex | LP 2004/78 | Acrylat |
| PolymerLatex | LP 2004/79 | carbox. SBR |
| DOW Reichhold | XZ 94457.05 | carbox. SBR |
| DOW Reichhold | XZ 94445.00 | carbox. SBR |
| DOW Reichhold | XZ 91988.00 | mod. SBR |
| SYNTHOPOL | DRR 1983 | stark carbox. AC |
| SYNTHOPOL | DRR 1984 | gering carbox. AC |
| SYNTHOPOL | DRR 1985 | gering carbox. AC |
| SYNTHOPOL | DRR 2006 | AC-S |
| Alberdingk-Boley | KDA 10 | AC-S |
| Alberdingk-Boley | V 50822 | AC |
| Alberdingk-Boley | AC 543 | AC |
| Alberdingk-Boley | AC 2522 | AC |
| Alberdingk-Boley | AC 25481 | AC |
| BASF | ACRONAL 500 D | AC |
| BASF | ACRONAL DS 2373 | Acrylat-Acrylnitril |
| BASF | ACRONAL S 728 | BA-Styrol |
| BASF | ACRONAL S 560 | BA-Stryol-AN |
| Rohm & Haas | Primal P-376 LO | AC |
| Rohm & Haas | Robond PS-8534 | AC |

Mit den erfindungsgemäßen Sperrschichten ist es gelungen, eine gute Balance zwischen Dicke der Sperrschicht und Sperrwirkung zu erzielen. Während die Sperrwirkung in der Regel mit zunehmender Sperrschicht-Dicke zunimmt, ist es für den Einsatz des Klebebandes vorteilhaft, die Gesamtdicke des Klebebandes möglichst gering zu halten, um einen problemfreien Durchlauf der Klebestellen im kontinuierlichen Betrieb (z.B. durch Kalander) zu ermöglichen.
Die Sperrschichten können vorteilhaft eine Schichtdicke von bis zu 10 µm aufweisen, was bei wässrigen Dispersionen einer Auftragung von bis zu 10 g/m² entspricht. Als besonders hervorragend haben sich Sperrschicht-Dicken von etwa 5 µ (entsprechend 5 g/m²) erwiesen. Diese Dicken ermöglichen einen guten Einsatz für den - insbesondere fliegenden - Rollenwechsel, mit den für die Herstellung der Sperrschicht gewählten Zusammensetzungen lassen sich so hervorragend sperrende, aber dennoch dünne Schichten realisieren.

Der spaltfähige Träger ist in einer hervorragenden Ausgestaltung des erfindungsgemäßen Klebebandes ein einstückiger (einlagiger) Träger, der sich bei Einwirkung entsprechender Kräfte flächig spalten lässt. Die Klebeverbindung mittels dieses Klebebandes lässt sich dann wieder trennen, indem der spaltfähige Träger flächig spaltet; insbesondere im wesentlichen mittig spaltet, die jeweiligen Klebemassenschichten sind durch die nach der Spaltung verbleibenden flächigen Reste des gespaltenen Trägers nichtklebend abgedeckt.
Der spaltfähige Träger kann auch mehrlagig aufgebaut sein, wobei eine der Trägerschichten spaltfähig ist.
Als "spaltfähig" werden im Rahmen dieser Schrift entsprechend solche Träger bzw. Trägerschichten bezeichnet, die parallel zu ihrer Flächenausdehnung spaltbar sind, und insbesondere solche Träger, die bezogen auf die Anforderungen in einem SpliceVerfahren auch tatsächlich spalten. "Im wesentlichen mittige Spaltung" bedeutet im Sinne dieser Erfindung, dass bei der Spaltung etwa gleich dicke, flächige Trägerreste als Spaltprodukte entstehen; im Gegensatz zu einer im wesentlichen nicht mittigen Spaltung, bei denen deutlich unterschiedlich dicke (flächige) Trägerreste als Spaltprodukte entstehen. Insbesondere soll eine im wesentlichen mittige Spaltung des einstückigen Trägers bzw. der spaltfähigen Trägerschicht eines mehrlagigen Trägers dadurch gekennzeichnet sein, dass die Spaltprodukte die entsprechenden Klebemassen zuverlässig nichtklebend abdecken. Bei einer unsymmetrischen Spaltung wäre dies auf Seiten des zu dünnen flächigen Trägerrestes gegebenenfalls nicht gewährleistet.
Die flächige Spaltung eines einlagigen spaltfähigen Trägers bzw. einer spaltfähigen Trägerschicht wird insbesondere ein flächiges Zerreißen des Trägers bzw. der Trägerschicht sein.

Als spaltfähige Träger kommen spaltfähige flächige Trägermaterialien aus Papier, insbesondere leicht spaltende Papiere, Kraftpapiere, sowie Papierverbundsysteme (beispielsweise Duplexpapiere und geleimte Papiersysteme) in Frage.

Vorteilhaft wird - insbesondere für ein Klebeband, bei welchem ein zweiter Träger auf der Oberseite vorgesehen ist - ein spaltfähiger Träger eingesetzt, welcher eine deutlich geringere Spaltfestigkeit als ein Träger aufweist, welcher Zugkräfte aufnehmen muss. Insbesondere bevorzugt wird ein spaltfähiger Träger verwendet, der einen deutlich geringen Weiterreißwiderstand aufweist als ein Träger oder eine Trägerschicht, die die eigentlichen Zugkräfte in der Hauptebene des Klebebands (also als der zweite Träger) aufnimmt, um die beiden Materialbahnen miteinander zu verbinden. Somit wird der Systemträger aufgespalten, bevor der Hauptträger zerstört wird. Das oder die spaltfähigen Träger basieren auf Papier. Hierfür kommen beispielsweise insbesondere folgende Papiere oder Papierverbundsysteme in Frage:
- Geleimte hochverdichtete Papiere
- Leicht spaltbare Papiersysteme, z. B. nicht nassfeste Papiere
- Kraftpapiere (beispielsweise beidseitig glatte Kraftpapiere - insbesondere geeignet gezeigt hat sich ein Kraftpapier von 55 µm Dicke und einem Flächengewicht von 65 g/m²)
- Duplexpapiere (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Spaltfähige Systeme, bei welchen die Spaltkräfte über die Größe der Verklebungspunkte bestimmt werden; solche spaltfähigen Systeme werden beispielsweise in der DE 198 41 609 A1 beschrieben.

Die obere Klebemasse und die untere Klebemasse des Klebebandes sollten eine hohe Klebkraft aufweisen. Insbesondere ist es vorteilhaft, wenn die Klebkräfte dieser Selbstklebemassen auf den jeweiligen Oberflächen (Träger und Substrat) größer ausfallen als die für ein Spalten des spaltfähigen Trägers erforderliche Kraft. Vorteilhafte spaltfähige Träger weisen bevorzugt Spaltfestigkeiten von 15 bis 70 cN/cm, insbesondere von 22 bis 60 cN/cm, ganz besonders von 25 bis 50 cN/cm auf. Zur Spaltfestigkeit und ihre Messung wird auf die DE 199 02 179 A1 verwiesen.

Eine Variante des erfindungsgemäßen Klebebandes ist dadurch gegeben, dass der spaltfähige Träger nicht einlagig und flächig spaltbar, sondern in Form zweier flächig voneinander lösbarer (delaminierbarer) Schichten ausgestaltet ist. Dies können insbesondere Papier-Papier-Laminate oder auch ein Laminat von Papier mit Folie sein. Hierfür kommen beispielsweise insbesondere folgende Laminat- oder Verbundsysteme auf Papier- und/oder Folienbasis in Frage:
- Duplexpapiere
   (definiert zusammenlaminierte Papiere, der Spaltvorgang verläuft extrem homogen; es entstehen keine Spannungsspitzen, z. B. durch inhomogene Verdichtung.
   Diese Papiere werden zur Herstellung von Tapeten und Filtern eingesetzt.)
- Spaltfähige Systeme, bei welchen die Spaltkräfte über die Größe der Verklebungspunkte bestimmt werden; solche Systeme werden beispielsweise in der
   DE 198 41 609 A1 beschrieben.
Insbesondere für repulpierbare Klebebänder ist ein Laminat zweier Papiere vorteilhaft. Beispiele für derartige Papierlaminate sind
- definiert zusammengeleimte hochverdichtete Papiere (insbesondere Papiere mit einer hohen Spaltfestigkeit). Die Leimung kann beispielsweise mit Stärke, stärkehaltigen Derivaten, Tapetenkleister auf Basis von Methylcellulose (tesa® Kleister, tesa AG, Hamburg; Methylan®, Henkel KgaA, Düsseldorf) oder auch auf Basis von Polyvinylalkoholderivaten erfolgen. Beschrieben werden solche Laminat-Systeme beispielsweise in der EP 0 757 657 A1.
Das Laminat kann auch ein solches einer Polymerschicht mit Papier sein, wobei das Polymer insbesondere ein solches ist, das sich durch Drucktechnik, wie etwa Tiefdruck, Siebdruck oder dergleichen, aufbringen lässt. Für das Polymer kommen hier insbesondere aushärtende Polymermassen in Frage, aber auch lösemittelhaltige Massen, denen nach der Aufbringung das Lösemittel entzogen wird, wobei die Schicht entsteht, weiterhin auch Polymermassen, die im erwärmten Zustand erweichen, also hinreichende Viskosität aufweisen, um aufgebracht werden zu können, bei Anwendungstemperatur aber als hinreichend stabile Schicht vorliegen.

Die Klebeverbindung mittels eines solchen Klebebandes lässt sich dann wieder trennen, indem sich die beiden Schichten des spaltfähigen Laminat-Trägers flächig voneinander lösen (delaminieren); die jeweiligen Klebemassenschichten sind durch die nach der Trennung verbleibenden flächigen Schichten des Trägers nichtklebend abgedeckt.
Der Kerngedanke eines derartigen Systems besteht darin, dass der Spaltvorgang des spaltbaren Trägers zwischen zwei voneinander trennbaren Schichten stattfindet und nicht innerhalb einer Schicht. Somit werden beispielsweise aus einem Papierträger keine Fasern herausgerissen und die notwendige Kraft zum Trennen der Schichten kann exakt definiert werden.
Ebenso darf durch eine längere Lagerung des Klebebands keine wesentliche Änderung der zum Trennen der Schichten notwendigen Kräfte auftreten. Im Falle eines laminierten Trägers sollten daher die vorteilhaft eingesetzten filmbildenden Komponenten ebenfalls derart gewählt werden, dass sie nicht in die offene (porige) Oberflächenstruktur des zu beschichtenden Trägers, insbesondere des Papiers, eindringen; hier könnte ein Eindringen derartiger Substanzen zu einer Veränderung des Delaminierverhaltens führen und somit ebenfalls die Stabilität des spaltfähigen Trägers verändern.

Die Art der Verbindung der beiden Schichten kann in beliebiger Weise oder bevorzugt wie im Folgenden beschrieben ausgeführt sein. Bevorzugt wird auch hier ein spaltfähiger Laminat-Träger verwendet, der einen deutlich geringen "Weiterreißwiderstand" (bezogen auf den Delaminierungsvorgang) aufweist als ein Träger oder eine Trägerschicht, die die eigentlichen Zugkräfte in der Hauptebene des Klebebands (also als der zweite Träger) aufnimmt, um die beiden Materialbahnen miteinander zu verbinden. Somit kann der spaltfähige Träger delaminieren, bevor der zweite Träger oder eine der Laminat-Trägerschichten zerstört wird. Das Klebeband besteht hierbei also aus zumindest zwei Schichten, die sich unter einer definierten Krafteinwirkung, die beim fliegenden Rollenwechsel überschritten wird, delaminieren.
Die Trennfestigkeit des Laminats bzw. der Zwei-Trägerschichten-Systeme weist dabei insbesondere die Zahlenwerte auf, wie sie oben für die Spaltfestigkeit des flächig spaltenden, einstückigen Trägers angegeben sind.

Der Vorteil eines wie vorstehend beschrieben Klebebandes besteht darin, dass die notwendige Kraft zum Trennen des Trennsystems stets konstant bleibt, so dass ein fliegender Rollenwechsel unter kontrollierten Bedingungen ausführbar ist und eine Fehlfunktion des Klebebands vermieden wird.

Die Klebemassen (Klebemasse unterhalb des spaltfähigen Trägers, Klebemasse oberhalb des spaltfähigen Trägers und/oder dritte Klebemassenschicht) des erfindungsgemäßen Klebebandes sind insbesondere Selbstklebemassen. Es können hervorragend - bezüglich der einzelnen Schichten unabhängig voneinander wählbar - unter anderem Acrylate (wasserlösliche und/oder nichtwasserlösliche), Naturkautschukmasssen, Synthesekautschukmassen, Mischungen der vorgenannten Massen, Massen auf Basis von Copolymeren und/oder Blockcopolymeren, insbesondere auf Basis von Acrylaten und/oder Naturkautschuken und/oder Synthesekautschuken und/oder Styrol eingesetzt werden. Insbesondere können vorteilhaft Dispersionen, heißschmelzende (auch heißschmelzverarbeitbare) Klebemassen und/oder Klebemassen auf Lösungsmittelbasis eingesetzt werden. Die Auswahl der Klebemassen erfolgt dabei in Hinblick auf den jeweils bestimmten Einsatzbereich des erfindungsgemäßen Klebebandes (insbesondere fliegender Rollenwechsel, statischer Rollenwechsel, Rollenendverklebung usw.).
Insbesondere für Acrylatklebemassen sollten keine Calciumionen aus der Trägerschicht in die Klebmassenschicht einwandern können.

Insbesondere vorteilhaft ist es, besonders scherfeste (Selbst-)Klebemassen einzusetzen; auch die weiteren die Klebeeigenschaften bestimmenden Größen wie Tack (Anfassklebrigkeit), Kohäsion, Viskosität, Vernetzungsgrad etc. sollten erfindungsgemäß auf den jeweiligen Verwendungszweck optimiert werden, was nach den dem Fachmann geläufigen Verfahren geschehen kann. Es sei darauf verwiesen, dass prinzipiell alle Basistypen von Haftklebemassen, welche die erfinderischen Kriterien erfüllen, eingesetzt werden können.

Übliche Schichtdicken der Klebemassenschichten betragen zwischen 25 µm und 100 µm. Übliche Flächengewichte der Haftklebemassenschichten liegen im Bereich von 20 g/m² und 80 g/m².

In einer vorteilhaften Ausgestaltung des erfindungsgemäßen Klebebandes ist das Klebeband zusätzlich mit einer detektierbaren Schicht versehen und/oder ist zumindest eine der bereits beschriebenen Schichten mit einem detektierbaren Merkmal versehen. Hierdurch kann eine Detektion des Klebebandes durch geeignete Detektierapparaturen während des (Splice-)Prozesses bewirkt werden. Insbesondere kann hierdurch eine automatisierte Steuerung des Prozesses erzielt werden. Bei geeigneter Wahl des detektierbaren Merkmals können durch dieses auch zusätzliche Informationen (über eine Ja/Nein-Information hinaus) übertragen werden.
Die Detektion der Schicht erfolgt vorzugsweise optisch und/oder elektromagnetisch. Beispielsweise kann eine der Schichten mit einem optisch erkennbaren Muster versehen sein, das mit Hilfe geeigneter Sensoren beim Durchlauf durch die Maschine feststellbar ist. In gleicher Weise kann eine der Schichten ein elektromagnetisch detektierbares Merkmal enthalten, beispielsweise eine Metallisierung, die mit Hilfe eines elektromagnetischen Sensors feststellbar ist. Aufgrund der Detektierbarkeit zumindest einer der Schichten wird beispielsweise beim Beschleunigen einer Papierrolle, die mit einem derartigen Klebeband versehen ist, das Klebeband detektiert und somit der Splice- oder Verbindungsvorgang mit dem Bahnende der alten Rolle zum richtigen Zeitpunkt ausgelöst. Des Weiteren kann bei der Weiterverarbeitung der Papierbahn in einer sogenannten Makulaturweiche das Klebeband detektiert werden, um diesen Abschnitt mit der Spliceverbindung auszusondern. Somit übernimmt das Klebeband die Funktion bisher zusätzlich aufgebrachter Etiketten oder Markierungen, die im Stand der Technik manuell an einer Rolle eines bahnförmigen Materials angebracht wurden, was häufig zu Fehlfunktionen führte, da das Etikett an einer falschen Stelle angebracht wurde. Somit ist gewährleistet, dass aufgrund der Detektierbarkeit des Klebebands die genaue Position der Verklebung automatisch feststellbar ist und das Abschneiden bzw. Aussondern dieser Verbindung stets an der richtigen Stelle selbsttätig automatisch erfolgen kann. Mit diesem detektierbaren Klebeband ist es auch möglich, aufgrund der Rotationsgeschwindigkeit der Rolle Informationen über den Prozessablauf zu erhalten, da aus der Bewegung des Klebebands beispielsweise unmittelbar auf die Transportgeschwindigkeit der Bahn geschlossen werden kann.
In einfacher Weise ist die detektierbare Schicht eine Metallfolie, insbesondere Aluminium. Die detektierbare Schicht, beispielsweise eine Aluminiumfolie, weist beispielsweise eine Dicke von 6 bis 12 µm auf. Ebenso ist es möglich, dass die detektierbare Schicht eine Papierfolie ist, die mit einer Metallisierung bzw. metallischen Anteilen versehen ist. Ist eine der Schichten eine Metallfolie, wird die andere Schicht bevorzugt in Form einer Acrylatdispersion, Polymethylmethacrylat (PMMA), Latex, Polyvinylacrylat (PVA), Polyvinylchlorid (PVC) bzw. als Copolymer dieser Stoffe ausgeführt. Mit diesen Stoffkombinationen können die vorstehend genannten Weiterreißwiderstände in gewünschter Weise definiert eingestellt werden. Dabei treten auch bei längerer Lagerung des Klebebands keine Veränderungen dieser Festigkeitswerte auf, da die Adhäsionskräfte zwischen diesen Materialien unverändert bleiben. Es versteht sich, dass sowohl die Metallfolie als auch die weitere Schicht jeweils an ihren Außenseiten mit einer Selbstklebemasse versehen sind. Diese Selbstklebemasse ist vorzugsweise eine wasserlösliche oder wasserunlösliche Acrylat-Selbstklebemasse. In gleicher Weise können beispielsweise Natur- und Synthesekautschukmassen als auch Dispersionen der vorstehend beschriebenen Verbindungen verwendet werden.
Weiterhin kann es vorteilhaft sein, dass die detektierbare Schicht ihrerseits auf einen Träger aufgebracht ist. Dabei ist die detektierbare Schicht auf einer Seite des Trägers angeordnet und die zugehörige Selbstklebemasse auf der anderen Seite des Trägers. Der Träger kann aus Papier oder einer Folie bestehen. Der Träger kann unter anderem ein glattes, weißes, gebleichtes Kraftpapier sein.

Anhand der Figuren 1 bis 4 soll das erfindungsgemäße Klebeband näher erläutert werden, ohne sich durch die dargestellten Beispiele im Erfindungsgedanken unnötig beschränken zu wollen. Es zeigen:
- Fig. 1: ein erfindungsgemäßes Klebeband mit einem spaltfähigen Träger und einer Sperrschicht
- Fig. 2: ein erfindungsgemäßes Klebeband mit einem spaltfähigen Träger, einer Sperrschicht und einem zweiten Träger
- Fig. 3: ein erfindungsgemäßes Klebeband mit einem spaltfähigen Trägerund zwei Sperrschichten
- Fig. 4: ein erfindungsgemäßes Klebeband mit einem spaltfähigen Träger, zwei Sperrschichten und einem zweiten Träger

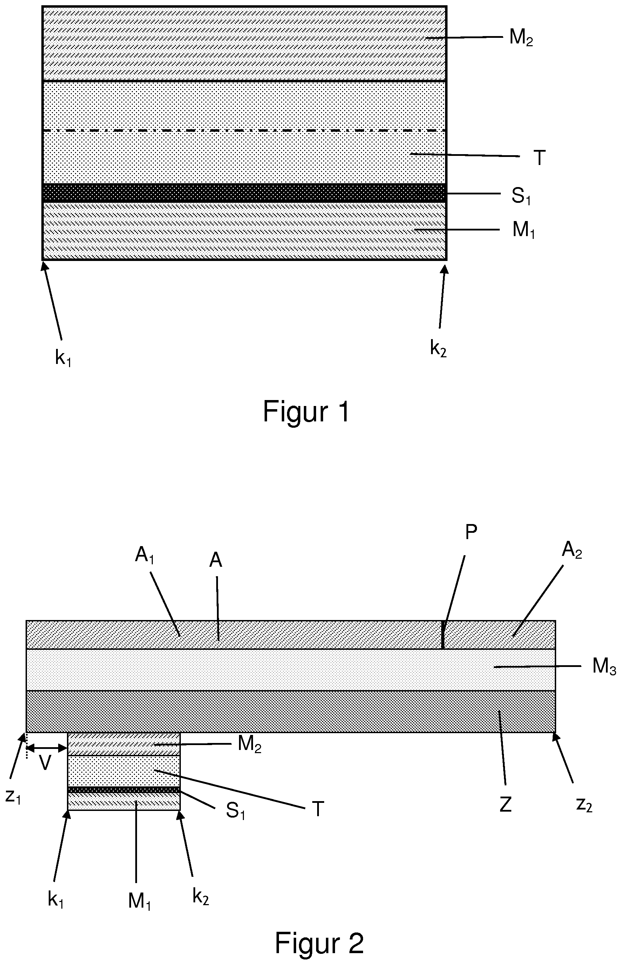

Figur 1 zeigt ein erfindungsgemäßes Klebeband mit einem spaltfähigen Träger (T). Auf der Oberseite des spaltfähigen Trägers ist eine Klebemassenschicht (M₂) vorgesehen, eine weitere Klebemassenschicht (M₁) befindet sich unterhalb des spaltfähigen Trägers (T). Zwischen der unteren Klebemassenschicht (M₁) und der Trägerschicht (T) ist eine für Calciumionen undurchlässige Sperrschicht (S₁) vorgesehen.

Figur 2 zeigt ein erfindungsgemäßes Klebeband, bei welchem ein Klebeband nach Figur 1 einem zweiten Träger (Z) unterklebt ist. Die Befestigung des spaltfähigen Trägers (T) an dem zweiten Träger (Z) erfolgt mittels der Klebemasse (M₂). Auf der Oberseite des zweiten Trägers (Z) ist eine dritte Klebemassenschicht (M₃) angeordnet, die die Klebeverbindung zu der ablaufenden Flachbahn während des Rollenwechsels bewirkt. In der Figur 2 ist dargestellt, dass die obere dritte Klebemasse (M₃) mit einer Abdeckung (A) versehen sein kann, die vorteilhaft eine Perforation (P), einen Schnitt oder ähnliches aufweist und somit in zwei Teilabdeckungen (A₁, A₂) geteilt ist.

Die Breite des unterklebten Klebebandes [Ausdehnung zwischen den Längskanten (k₁, k₂)] ist kleiner als die Breite des zweiten Trägers (Z) [Ausdehnung zwischen dessen Längskanten (z₁, z₂)]. Das unterklebte Klebeband ist nicht mittig (bezogen auf die Breite) unter dem zweiten Träger angeordnet, sondern zur einen Längskante (z₁) des zweiten Trägers (Z) hin verschoben angeordnet. Von dieser Längskante (z₁) des zweiten Trägers (Z) ist das unterklebte Klebeband um einen Abstand (V) eingerückt angeordnet.

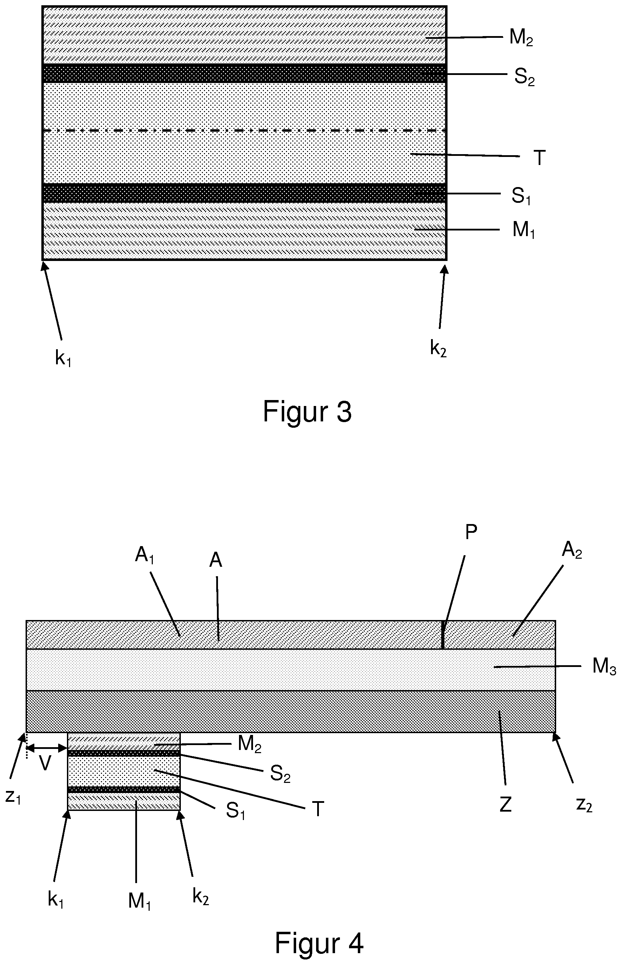

Figur 3 zeigt ein Klebeband entsprechend der Ausführung in Figur 1, bei der aber eine weitere Sperrschicht (S₂) zwischen dem spaltfähigen Träger (T) und der Klebemasse (M₂) oberhalb dieses Trägers (T) vorgesehen ist.

Figur 4 zeigt ein Klebeband entsprechend Figur 2 mit einem unterklebten Klebeband entsprechend Figur 3.

### Spliceverfahren

Kein Gegenstand der Erfindung ist weiterhin ein Verfahren für den fliegenden Rollenwechsel unter Einsatz eines erfindungsgemäßen Klebesystems oder eines erfindungsgemäßen Klebebandes.

Bei einer ersten (nicht grafisch dargestellten) Variante - unter Einsatz eines Klebebandes entsprechend einer der Figuren 1 und 3 - des Verfahren wird die oberste Flachbahnwicklung (11) (insbesondere deren Ende oder deren Endbereich) einer neuen Rolle mit einem zur Erzielung einer wieder klebeflächenfrei trennbaren Klebeverbindung geeigneten Klebesystem (S) an der darunter liegenden Flachbahnwicklung (12) fixiert, so dass ein zum Verbinden mit der ablaufenden Flachbahn (13) benötigter Teil einer Selbstklebemasse (M₂) offenliegt. Daraufhin wird die so ausgerüstete neue Rolle neben eine fast gänzlich abgespulte zu ersetzende alte Rolle platziert und auf die im wesentlichen gleiche Drehgeschwindigkeit wie diese beschleunigt, dann gegen die alte Flachbahn (13) gedrückt, wobei die offenliegende Selbstklebemasse (M₂) des Klebebandes (K) mit der alten Flachbahn (13) bei im wesentlichen gleichen Geschwindigkeiten der Bahnen verklebt, während zugleich die Verklebung der obersten Flachbahnlage (Endlage der Wicklung) (11) auf der darunter liegenden Flachbahnlage (12) derart spaltet, dass nach dem Trennvorgang keine klebenden Bereiche offenliegen, wobei ein erfindungsgemäßes Klebeband (K) eingesetzt wird.

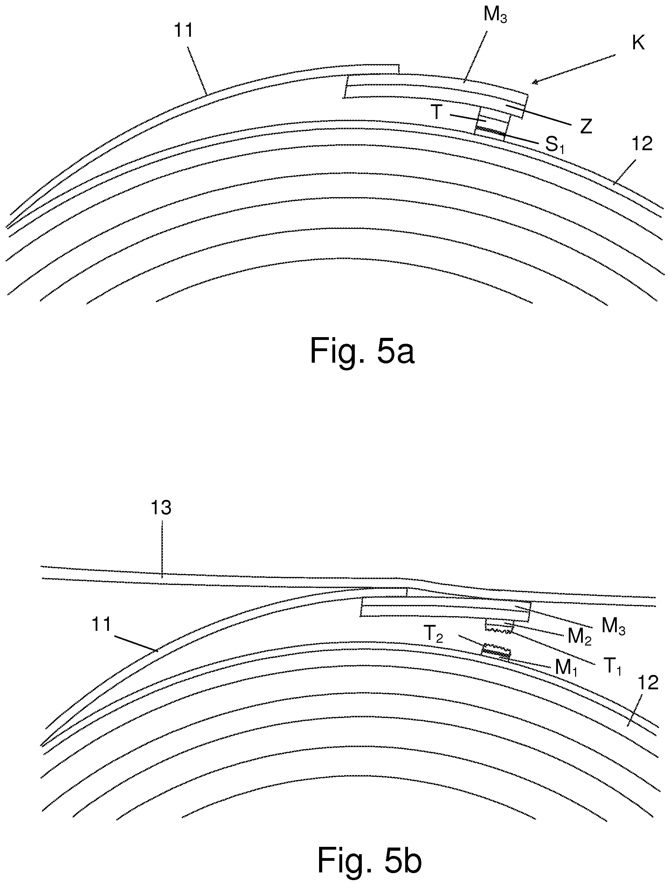

Bei einer weiteren Variante des Verfahrens, wie sie in den Figuren 5a uns 5b mit einem Klebeband entsprechend einer der Figuren 2 und 4 schematisch dargestellt ist, ohne sich hierdurch im Erfindungsgedanken unnötig beschränken zu wollen, wird die oberste Flachbahnwicklung (11) (insbesondere deren Ende oder deren Endbereich) einer neuen Rolle mit einem Klebeband (K), umfassend zumindest ein zur Erzielung einer wieder klebeflächenfrei trennbaren Klebeverbindung geeignetes Klebebandbauteil mit einem spaltfähigen Träger (T), an der darunter liegenden Flachbahnwicklung (12) fixiert, so dass ein zum Verbinden mit der ablaufenden Flachbahn (13) benötigter Teil einer Selbstklebemasse (M₃) offenliegt (vgl. Figur 5a). Daraufhin wird die so ausgerüstete neue Rolle neben eine fast gänzlich abgespulte zu ersetzende alte Rolle platziert und auf die im wesentlichen gleiche Drehgeschwindigkeit wie diese beschleunigt, dann gegen die alte Flachbahn (13) gedrückt, wobei die offenliegende Selbstklebemasse (M) des Klebebandes (K) mit der alten Flachbahn (13) bei im wesentlichen gleichen Geschwindigkeiten der Bahnen verklebt, während zugleich die mittels des Klebebandes (K) bewirkte Verklebung der obersten Flachbahnlage (Endlage der Wicklung) (11) auf der darunter liegenden Flachbahnlage (12) durch eine flächige Spaltung des Trägers (T) derart flächig getrennt wird, dass nach dem Spalten keine klebenden Bereiche offenliegen, wobei ein erfindungsgemäßes Klebeband eingesetzt wird (vgl. Figur 5b).

In einer Weiterentwicklung des Verfahrens wird das Klebeband rechtwinklig zur laufenden Flachbahn verklebt. In anderen vorteilhaften Varianten des erfindungsgemäßen Verfahrens kann die Verklebung des Klebebandes auch in einem spitzen Winkel von bis zu 30° zur laufenden Flachbahn, insbesondere von bis zu 10° erfolgen. Bei dem Spliceverfahren wird das erfindungsgemäße Klebeband (K) in einer geraden Linie unter das Ende der obersten Flachbahnlage (11) einer neuen Flachbahnrolle (oder in einem geringen Abstand vom Ende der obersten Flachbahnwicklung) auf die neue Flachbahnrolle verklebt, so dass ein Teil des Klebebandes (K) frei bleibt, während die Klebemasse (M₁) unterhalb des spaltfähigen Trägers (T) auf der darunter liegenden Flachbahnlage (12) verklebt und damit die oberste Bahnlage (insbesondere das Ende der obersten Bahnlage) sichert, wobei gegebenenfalls zunächst nur ein Teil (A₂) der gegebenenfalls auf der Selbstklebemasse (M) befindlichen Abdeckung (A) abgezogen wurde, so dass der zum Spliceverfahren benötigte Teil der Selbstklebemasse noch mit der Abdeckung (A₁) abgedeckt ist und die Rolle in diesem Zustand keine freie klebende Fläche aufweist. Daraufhin wird zur abschließenden Vorbereitung des Spliceverfahrens die gegebenenfalls noch vorhandene restliche Abdeckung (A₁) entfernt, worauf die so ausgerüstete neue Rolle neben eine fast gänzlich abgespulte, zu ersetzende alte Rolle platziert und auf die gleiche Drehgeschwindigkeit wie diese beschleunigt wird. Dann wird die neue Rolle gegen die alte Bahn (13) gedrückt, wobei die offenliegende Selbstklebemasse (M) des Klebebandes (K) mit der alten Bahn (13) bei im wesentlichen gleichen Geschwindigkeiten der Bahnen verklebt, während zugleich der spaltfähige Träger (T) spaltet, wobei beide Flächen im Bereich der bisherigen Verklebung der obersten Flachbahnlage (11) mit der darunter liegenden Flachbahnwicklung (12) nichtklebend verbleiben.
Bei den Flachbahnen handelt es sich insbesondere um Papierbahnen und/oder um Folienbahnen und/oder um Textilmaterialbahnen (Gewebe, Gewirke, Vliese oder dergleichen).

## Patentansprüche

1. Klebeband für den Rollenwechsel von Flachbahnmaterialien, umfassend einen flächig spaltbaren Träger, zumindest eine Klebemassenschicht, die oberhalb des spaltbaren Trägers angeordnet ist, und eine Klebemassenschicht, die unterhalb des spaltbaren Trägers angeordnet ist,
**dadurch gekennzeichnet, dass**
der spaltbare Träger aus Papier besteht oder ein Papierverbundsystem ist, zumindest zwischen dem spaltbaren Träger und der Klebemassenschicht unterhalb des spaltbaren Trägers eine erste Sperrschicht vorgesehen ist, die für Calciumionen undurchlässig ist,
wobei die Sperrschicht durch Auftragen einer wässrigen Latexdispersion erhalten werden kann, die nicht in das Trägermaterial des spaltfähigen Trägers eindringt, wobei die Latices solche auf Acrylatbasis, auf Basis carboxylierter Acrylate, auf Basis carboxylierter Styrol-Butadien-Kautschuke, auf Basis modifizierter Styrol-Butadien-Kautschuke, auf Acrylat-Styrol-Basis, auf Acrylat-Acrylnitrilbasis, auf Butylacrylat-Styrolbasis und/oder auf Butylacrylat-Styrol-Acrylnitrilbasis sind.

2. Klebeband nach einem der vorangehenden Ansprüche, **dadurch gekennzeichnet,**
**dass** zwischen dem spaltbaren Träger und der Klebemassenschicht oberhalb des spaltbaren Trägers eine zweite Sperrschicht vorgesehen ist, die für Calciumionen undurchlässig ist.

3. Klebeband nach einem der vorangehenden Ansprüche, **dadurch gekennzeichnet, dass**
zumindest eine der Sperrschichten unterhalb und/oder oberhalb des spaltfähigen Trägers eine solche ist, die durch Auftragen der Latexdispersion und anschließendem Trocknen erhalten wird.

4. Klebeband nach einem der vorangehenden Ansprüche, **dadurch gekennzeichnet, dass**
oberhalb der Klebemassenschicht oberhalb des spaltbaren Trägers ein zweiter Träger vorgesehen ist, oberhalb derer wiederum eine dritte Klebemassenschicht vorgesehen ist.

5. Klebeband nach Anspruch 4, **dadurch gekennzeichnet, dass**
der zweite Träger eine größere Breite aufweist als der spaltbare Träger.

6. Klebeband nach Anspruch 5, **dadurch gekennzeichnet, dass**
zwischen der einen Längskante des zweiten Trägers und der auf dieser Seite liegenden Längskante des spaltfähigen Trägers ein Abstand (V) von bis zu 15 mm, besonders 0,5 bis 7 mm, besser 1,5 bis 4 mm, ganz besonders bevorzugt von 2 bis 3,5 mm vorgesehen ist.

## Claims

1. Adhesive tape for the roll change of flat-web materials, comprising an extensively splittable carrier, at least one layer of adhesive disposed above the splittable carrier, and a layer of adhesive disposed below the splittable carrier,
**characterized in that**
the splittable carrier is composed of paper or a composite paper system,
at least between the splittable carrier and the layer of adhesive below the splittable carrier there is a first barrier layer which is impervious to calcium ions,
wherein the barrier layer may be obtained by applying an aqueous latex dispersion which does not penetrate the carrier material of the splittable carrier, wherein the latices are latices based on acrylate, based on carboxylated acrylates, based on carboxylated styrene-butadiene rubbers, based on modified styrene-butadiene rubbers, based on acrylate-styrene, based on acrylate-acrylonitrile, based on butyl acrylate-styrene and/or based on butyl acrylate-styrene-acrylonitrile.

2. Adhesive tape according to either of the preceding claims, **characterized in that** between the splittable carrier and the layer of adhesive above the splittable carrier there is a second barrier layer which is impervious to calcium ions.

3. Adhesive tape according to either of the preceding claims, **characterized in that** at least one of the barrier layers below and/or above the splittable carrier is a barrier layer obtained by applying the latex dispersion and subsequently drying.

4. Adhesive tape according to any of the preceding claims, **characterized in that** above the layer of adhesive above the splittable carrier there is a second carrier above which in turn there is a third layer of adhesive.

5. Adhesive tape according to Claim 4, **characterized in that** the second carrier has a greater width than the splittable carrier.

6. Adhesive tape according to Claim 5, **characterized in that** between one long edge of the second carrier and the long edge of the splittable carrier located on that side there is a distance (V) of up to 15 mm, particularly 0.5 to 7 mm, more preferably 1.5 to 4 mm, very preferably of 2 to 3.5 mm.

## Revendications

1. Bande adhésive pour le remplacement de rouleaux de matériaux en bande plate, comprenant un support clivable plat, au moins une couche de masse adhésive, qui est agencée au-dessus du support clivable et une couche de masse adhésive qui est agencée en dessous du support clivable,
**caractérisée en ce que**
le support clivable est constitué de papier ou d'un système composite de papier,
une première couche de barrière, qui est imperméable pour les ions calcium, est prévue au moins entre le support clivable et la couche de masse adhésive en dessous du support clivable,
la couche de barrière pouvant être obtenue par application d'une dispersion de latex aqueuse, qui ne pénètre pas dans le matériau support du support clivable, les latex étant à base d'acrylate, à base d'acrylates carboxylés, à base de caoutchoucs de styrène-butadiène carboxylés, à base de caoutchoucs de styrène-butadiène modifiés, à base d'acrylate-styrène, à base d'acrylate-acrylonitrile, à base d'acrylate de butyle-styrène et/ou à base d'acrylate de butyle-styrène-acrylonitrile.

2. Bande adhésive selon l'une quelconque des revendications précédentes, **caractérisée en ce qu'**une deuxième couche de barrière, qui est imperméable pour les ions calcium, est prévue entre le support clivable et la couche de masse adhésive au-dessus du support clivable.

3. Bande adhésive selon l'une quelconque des revendications précédentes, **caractérisée en ce qu'**au moins une des couches de barrière en dessous et/ou au-dessus du support clivable est obtenue par application de la dispersion de latex, puis séchage.

4. Bande adhésive selon l'une quelconque des revendications précédentes, **caractérisée en ce qu'**un deuxième support est prévu au-dessus de la couche de masse adhésive au-dessus du support clivable, au-dessus duquel une troisième couche de masse adhésive est encore prévue.

5. Bande adhésive selon la revendication 4, **caractérisée en ce que** le deuxième support présente une largeur plus grande que le support clivable.

6. Bande adhésive selon la revendication 5, **caractérisée en ce qu'**un écart (V) de jusqu'à 15 mm, en particulier de 0,5 à 7 mm, mieux de 1,5 à 4 mm, de manière tout particulièrement préférée de 2 à 3,5 mm, est prévu entre un bord longitudinal du deuxième support et le bord longitudinal du support clivable disposé sur ce côté.
